# EUROPEAN PATENT APPLICATION

(11) **EP 2 675 197 A1**
(43) Date of publication of application: **18.12.2013**
(21) Application number: 12744725.8
(22) Date of filing: 03.02.2012
(51) Int. Cl.: H04W 4/06, H04L 12/56, H04W 72/10

(54) **MESSAGE DELIVERY SYSTEM AND BASE STATION, AND MESSAGE DELIVERY METHOD**

(30) Priority: 07.02.2011 JP 2011024304
(71) Applicant: NTT DOCOMO, INC., Chiyoda-ku Tokyo 100-6150 (JP)
(72) Inventor: YABUKI, Shogo, Tokyo 100-6150 (JP); YOKOYAMA, Kengo, Tokyo 100-6150 (JP); MIAO, Zhen, Tokyo 100-6150 (JP); OBATA, Kazunori, Tokyo 100-6150 (JP); HARANO, Seigo, Tokyo 100-6150 (JP); UCHIYAMA, Tadashi, Tokyo 100-6150 (JP)
(74) Representative: HOFFMANN EITLE
(86) International application number: PCT/JP2012/052534
(87) International publication number: WO 2012/108358

(57) **Abstract**

A message broadcast system for broadcasting messages to user devices includes a cell broadcast center and a base station, wherein the cell broadcast center includes an obtaining unit for obtaining a sender identifier from a message broadcast request, a first table associating the sender identifier with identifier information for identifying a message to be added to the message and corresponding to a priority for controlling the order of broadcast messages, a selecting unit for selecting an identifier information corresponding to the sender identifier, a generating unit for generating a message including the identifier information, and a transmission unit for transmitting the message to the base station; and the base station includes an obtaining unit for obtaining an identifier information included in a message from the cell broadcast center, a second table associating the identifier information with a priority for controlling the order of broadcast messages, a priority obtaining unit for obtaining the priority corresponding to the message identifier information and a broadcast controlling unit for controlling the order of broadcast messages based on the priority.

## Description

### TECHNICAL FIELD

The present invention relates to a system for broadcasting emergency messages to mobile stations.

### BACKGROUND ART

The LTE (Long Term Evolution) specifications are being developed by the 3GPP (3rd Generation Partnership Project) that is a standardization group for the W-CDMA (Wideband-Code Division Multiple Access). The LTE is a standard that is further evolved from the HSPA (High Speed Packet Access) technology that is extended from the W-CDMA. In the LTE, high speed communications are implemented, in which the speed is faster than 100 Mbps in the downlink and is faster than 50 Mbps in the uplink; delays are reduced; and frequency utilization efficiencies are improved.

In the 3GPP, an ETWS (Earthquake and Tsunami Warning System) is specified (e.g. non-patent document 1 and non-patent document 2).

### RELATED ART DOCUMENT

### [NON-PATENT DOCUMENT 1]

TS25.419 V8.1.0 (9.1.3 WRITE-REPLACE) [NON-PATENT DOCUMENT 2]

TS36.413 V8.10.0 (8.12.1 Write-Replace Warning)

### SUMMARY OF THE INVENTION

### PROBLEM TO BE SOLVED BY THE INVENTION

In an ETWS of the 3G, category identifications are included in information elements, and it is possible to determine priorities of messages to be broadcasted.

But in an ETWS targeted for the LTE, information elements do not include an information element used for determining priorities of messages to be broadcasted, the information element corresponding to the category identifier of the 3G. Therefore, it is not possible to clarify the priorities of messages to be broadcasted.

It is an object of the present invention, in order to solve the above problem, to provide a priority control for messages to be broadcasted in an ETWS for LTE, without increasing information elements of messages to be broadcasted.

### MEANS FOR SOLVING THE PROBLEM

According to an embodiment of the present invention, a message broadcast system, in which messages are broadcasted to user devices that perform radio communications based on LTE, is provided.

The message broadcast system includes a cell broadcast center and a base station, wherein, the cell broadcast center includes a sender identifier obtaining unit configured to obtain a sender identifier of a message broadcast request from the message broadcast request for requesting a message broadcast, a first table associating the sender identifier of the message broadcast request with message identifier information that is used for identifying a message to be added to the message and that is corresponding to a priority for controlling the order of messages to be broadcasted from the base station, a message identifier information selecting unit configured to select, from the first table, the message identifier information corresponding to the sender identifier obtained by the sender identifier obtaining unit, a message generating unit configured to generate a message including the message identifier information selected by the message identifier selecting unit, and a transmission unit configured to transmit the message, generated by the message generating unit, to the base station, and wherein, the base station includes a message identifier information obtaining unit configured to obtain the message identifier information included in the message from the cell broadcast center, a second table associating the message identifier information with the priority for controlling the order of messages to be broadcasted, a priority obtaining unit configured to obtain the priority, from the second table, corresponding to the message identifier information obtained by the message identifier information obtaining unit, and a broadcast controlling unit configured to control the order of messages to be broadcasted based on the priority obtained by the priority obtaining unit.

According to an embodiment of the present invention, provided is a base station that broadcasts messages to user devices that perform radio communications based on LTE, wherein, the base station includes a message identifier information obtaining unit configured to obtain message identifier information included in a message from a cell broadcast center, a second table associating the message identifier information with a priority for controlling the order of broadcast messages to be broadcasted, a priority obtaining unit configured to obtain, from the second table, the priority corresponding to the message identifier information obtained by the message identifier information obtaining unit, and a broadcast controlling unit configured to control the order of broadcast messages based on the priority obtained by the priority obtaining unit.

According to an embodiment of the present invention, provided is a message broadcast method, in a message broadcast system, for broadcasting messages to user devices that perform radio communications based on LTE, wherein, the message broadcast system includes a cell broadcast center and a base station; and steps performed by the cell broadcast center include a sender identifier obtaining step for obtaining a sender identifier of a message broadcast request from the message broadcast request for requesting a message broadcast, a message identifier information selecting step for selecting a message identifier information, corresponding to the sender identifier obtained by the sender identifier obtaining step from a first table associating the message identifier information with a message identifier information that is used for identifying a message to be added to the message and that is corresponding to a priority for controlling the order of messages to be broadcasted from the base station, a message generating step for generating a message including the message identifier information selected by the message identifier selecting step, and a transmission step for transmitting the message, generated by the message generating step, to the base station; and steps performed by the base station includes a message identifier obtaining step for obtaining message identifier information included in the message from the cell broadcast center, a priority obtaining step for obtaining a priority, from a second table associating the message identifier information with a priority for controlling the order of broadcast messages to be broadcasted, corresponding to the message identifier information obtained by the message identifier information obtaining step, and a broadcast controlling step for controlling the order of messages to be broadcasted based on the priority obtained by the priority obtaining step.

According to an embodiment of the present invention, provided is a message broadcast method, of a base station, for broadcasting messages to user devices that perform radio communications based on LTE, wherein, the message broadcast method includes a message identifier information obtaining step for obtaining a message identifier information included in a message from a cell broadcast center, a priority obtaining step for obtaining a priority, from a second table associating the message identifier information with a priority for controlling the order of broadcast messages to be broadcasted, corresponding to the message identifier information obtained by the message identifier information obtaining step, and a broadcast controlling step for controlling the order of messages to be broadcasted based on the priority obtained by the priority obtaining step.

### EFFECT OF THE PRESENT INVENTION

According to the disclosed present embodiments, it is possible to perform a priority control for messages to be broadcasted in an ETWS for LTE, without increasing information elements of messages to be broadcasted.

### BRIEF DESCRIPTION OF THE DRAWINGS

FIG. 1 is a drawing illustrating an example of a system according to an embodiment of the present invention.
FIG. 2 is a functional block diagram illustrating a cell broadcast center according to an embodiment of the present invention.
FIG. 3 is a drawing illustrating an example of an identifier & message identifier correspondence table according to an embodiment of the present invention.
FIG. 4 is a functional block diagram illustrating a cell broadcast center according to an embodiment of the present invention.
FIG. 5 is a drawing illustrating an example of information elements to be included a message broadcast request.
FIG. 6 is a functional block diagram illustrating a base station according to an embodiment of the present invention.
FIG. 7 is a drawing illustrating a message identifier & priority correspondence table according to an embodiment of the present invention.
FIG. 8 is a drawing illustrating an order of messages to be broadcasted according to an embodiment of the present invention.
FIG. 9 is a functional block diagram illustrating a base station according to an embodiment of the present invention.
FIG. 10 is a drawing illustrating a sequence chart for a system operation according to an embodiment of the present invention.
FIG. 11 is a drawing illustrating an example of information elements to be set by a system according to an embodiment of the present invention.

### EMBODIMENTS FOR CARRYING OUT THE INVENTION

In the following, embodiments of the present invention will be described with reference to the accompanying drawing. Note that the same referral numbers are used throughout the figures when referring to the same functionalities, and the repeated same descriptions are omitted.

### <Embodiments>

### <System>

A system for broadcasting emergency messages (hereinafter, emergency message broadcast system) according to the present embodiment will be described. The emergency message broadcast system can be a warning system that broadcasts emergency messages for reporting earthquakes and tsunamis. For example, the warning system includes an earthquake and tsunami warning system or a public warning system PWS. The emergency message broadcast system communicates based on LTE scheme.

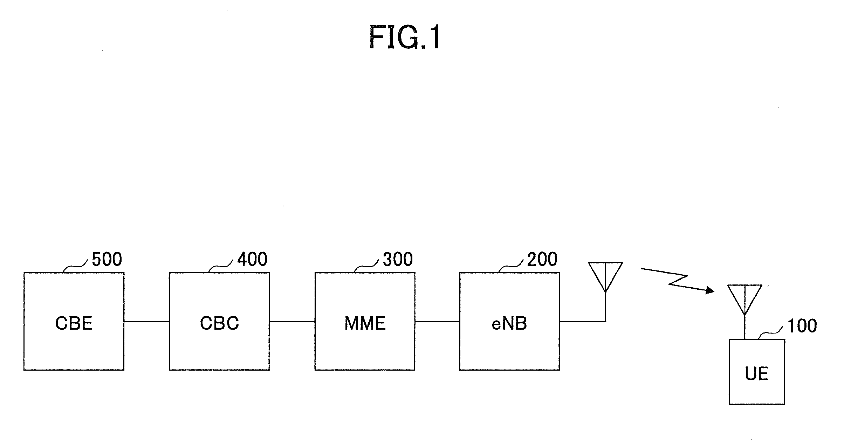

FIG. 1 is a drawing illustrating an example of an emergency message broadcast system of the present embodiment.

The emergency message broadcast system of the present embodiment includes the cell broadcast entity CBE 500. The CBE 500 sends an Emergency Broadcast Request to a cell broadcast center 400 for requesting a message broadcast. The CBE 500 is owned by, for example, a meteorological institute or a local government.

The emergency message broadcast system of the present embodiment includes a cell broadcast center CBC 400. Note that the cell broadcast center may be installed together with the cell broadcast entity 500 in the same housing. The CBC 400 analyzes the Emergency Broadcast Request from the cell broadcast entity 500 and generates a broadcast area and a broadcast message. Also, the cell broadcast center 400 determines a priority of the broadcast message. The cell broadcast center 400 adds a message identifier, which corresponds to the priority, to the Message Broadcast Request. For example, when the Message Broadcast Request is received from the cell broadcast entity 500, the message identifier may be derived from an IP address of the cell broadcast entity that is the sender of the Message Broadcast Request, and from information maintained by the cell broadcast center 400. The information includes, for example, information elements to be included in the message that should be sent by the cell broadcast center 400. For example, the information elements include a message identifier, a serial number, etc. The cell broadcast center 400, for example, stores IP addresses and message identifiers that correspond to the IP addresses. Or the serial numbers may correspond to the IP addresses. The cell broadcast center 400 sends a message broadcast request (Write Replace Warning Request) to switching centers (MME: Mobility management Entity) 300 that correspond to the broadcast area. The Write Replace Warning Request includes information indicating the broadcast area and the message identifier.

The emergency message broadcast system of the present embodiment includes the switching center 300. The switching center 300 applies a protocol transformation to the message broadcast request from the cell broadcast center 400. The switching center 300 forwards the message broadcast request, to which the protocol transformation has been applied, to a base station (eNB: eNodeB) 200. Also, for example, the switching center 300, in response to the message broadcast request from the cell broadcast center 400, sends a message broadcast response (Write Replace Warning Response) to the cell broadcast center 400. The cell broadcast center 400, which has received the message broadcast response, sends a message broadcast response (Emergency Broadcast Response) to the cell broadcast entity 500.

The emergency message broadcast system of the present embodiment includes the base station 200. The base station 200, in response to the message broadcast request from the switching center 300, transmits a message to user devices (UEs) 100. The message includes an emergency message. When transmitting the message, the base station 200 compares the priority that corresponds to the message identifier included in the message broadcast request (Write Replace Warning Request) from the switching center 300 with the priority that corresponds to the message identifier included in the message currently being broadcasted. Note that if there is no message currently being broadcasted (i.e., there are no uncompleted broadcast messages), then no comparison is needed. Based on the result of the comparison, in the case where the priority, corresponding to the message identifier included in the message currently being broadcasted, is higher than the priority, corresponding to the message identifier included in the message broadcast request, the base station 200 continues broadcasting the message currently being broadcasted. In the case where the priority, corresponding to the message identifier included in the message broadcast request, is higher than the priority, corresponding to the message identifier included in the message currently being broadcasted, the base station stops broadcasting the message currently being broadcasted, and broadcasts the message corresponding to the message broadcast request.

In the emergency message broadcast system of the present embodiment, priorities for the order of messages to be broadcasted are associated with message identifiers. Further, message identifiers are associated with IP addresses of message senders. The cell broadcast center 400 identifies the message identifier corresponding to the IP address, which is an IP address of the message sender, the cell broadcast entity 500, and includes the message identifier in the message broadcast request. By having the message identifier included in the message broadcast request, the base station 200 can identify the message priority corresponding to the message identifier. Therefore, without requiring an information element for identifying priorities, the base station 200 can broadcast messages, giving higher priorities to messages that should be given higher priorities based on the identified priorities.

### <cell broadcast center>

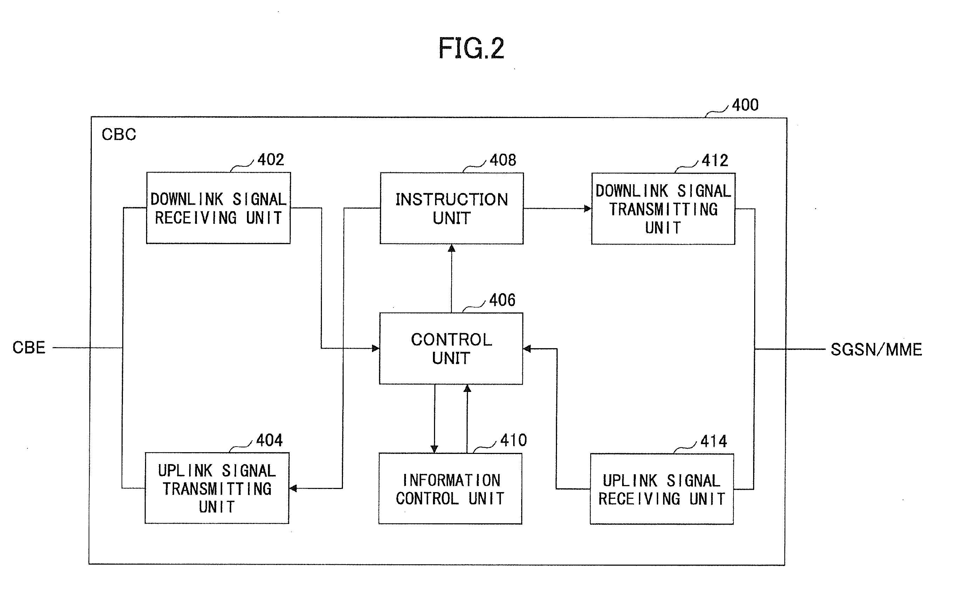

FIG. 2 is a drawing illustrating a cell broadcast center 400 according to the present embodiment.

The cell broadcast center 400 of the present embodiment includes a downlink signal receiving unit 402. The downlink signal receiving unit 402 receives, for example, downlink signals from the cell broadcast entity 500. The downlink signals include a message broadcast request (Emergency Broadcast Request). The downlink signal receiving unit 402 inputs the received downlink signals to a control unit 406.

The cell broadcast center 400 of the present embodiment includes an uplink signal receiving unit 414. The uplink signal receiving unit 414 receives signals from the switching center 300. The signals include a message broadcast response (Write Replace Warning Response).

The cell broadcast center 400 of the present embodiment includes an information control unit 410. The information control unit 410 is connected to the control unit 406. The information control unit 410 stores a table (hereinafter, "CBE identifier & message identifier correspondence table") that shows the correspondences between identifiers of terminal devices, the terminal devices being included in the cell broadcast entity 500 configured to send a message broadcast request (Emergency Broadcast Request), and message identifiers to be included in the message broadcast request (Write Replace Warning Request). For example, IP addresses can be used as identifiers of the terminal devices. The message identifiers are associated with priorities for the order of messages to be broadcasted.

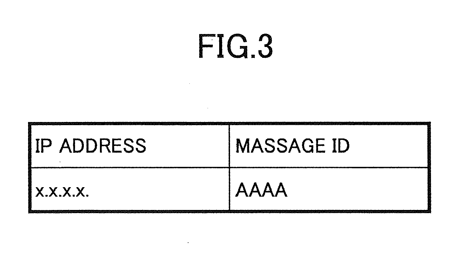

FIG. 3 is an example of the CBE identifier & message identifier correspondence table.

According to FIG. 3, "x.x.x.x", as an IP address of the sender of the message broadcast request, is associated with "AAAA" (Hexadecimal display; Hexadecimal value), as a message identifier (Message ID).

The cell broadcast center 400 of the present embodiment includes the control unit 406. The control unit 406 is connected to the downlink signal receiving unit 402, the uplink signal receiving unit 414, an instruction unit 408, and the information control unit 410. The control unit 406 obtains an identifier of an originating terminal device, which is included in the downlink signals inputted from the downlink signal receiving unit 402. The control unit 406, referring to the CBE identifier & message identifier correspondence table, selects a message identifier that corresponds to the identifier of the originating terminal device of the downlink signals. The control unit 406, including the message identifier, which corresponds to the identifier of the originating terminal device included in the downlink signals, into the downlink signals, inputs the downlink signals to the instruction unit 408. For example, the control unit 406 obtains an IP address of an originating terminal device of the message broadcast request (Emergency Broadcast Request) from the downlink signal receiving unit 402. The control unit 406, referring to the CBE identifier & message identifier correspondence table stored in the information control unit 410, identifies a message identifier that corresponds to the IP address. The control unit 406 instructs the instruction unit 408 to include the message identifier, which corresponds to the IP address of the originating terminal of the message broadcast request (Emergency Broadcast Request), into the message broadcast request (Write Replace Warning Request) and to send it to the base station 200.

Also, the control unit 406 instructs the instruction unit 408 to send the message broadcast response (Emergency Broadcast Response) from the uplink signal receiving unit 414 to the cell broadcast entity 500.

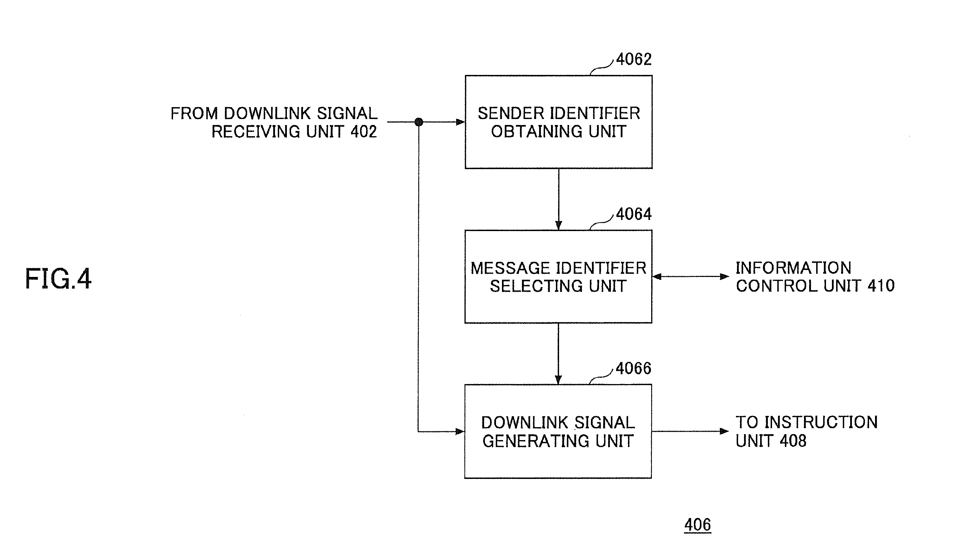

FIG. 4 is a drawing illustrating functions of the control unit 406.

The functions of the control unit 406 include a function performed by a sender identifier obtaining unit 4062. The sender identifier obtaining unit 4062 is connected to the downlink signal receiving unit 402. The sender identifier obtaining unit 4062 obtains an identifier of originating terminal device, included in the downlink signals from the downlink signal receiving unit 402. For example, as an identifier, an IP address can be obtained. The sender identifier obtaining unit 4062 inputs the identifier of the originating terminal device to a message identifier selecting unit 4064.

The functions of the control unit 406 include a function performed by the message identifier selecting unit 4064. The message identifier selecting unit 4064 is connected to the sender identifier obtaining unit 4062 and the information control unit 410. The message identifier selecting unit 4064, referring to the CBE identifier & message identifier correspondence table to be stored in the information control unit 410, selects a message identifier that corresponds to the identifier of the originating terminal device from the sender identifier obtaining unit 4062. The message identifier selecting unit 4064 inputs the message identifier, which corresponds to the identifier of the originating terminal device, to the downlink signal generating unit 4066.

The functions of the control unit 406 include a function performed by the downlink signal generating unit 4066. The downlink signal generating unit 4066 is connected to the message identifier selecting unit 4064 and the downlink signal receiving unit 402. The downlink signal generating unit 4066 includes a message identifier, which should be inputted from the message identifier selecting unit 4064, into the downlink signals, which should be inputted from the downlink signal receiving unit 402. For example, the downlink signal generating unit 4066 includes the message identifier, selected by the message identifier selecting unit 4064 based on the message broadcast request, into the message broadcast request (Emergency Broadcast Request), which should be inputted by the downlink signal receiving unit 402.

### <the message broadcast request>

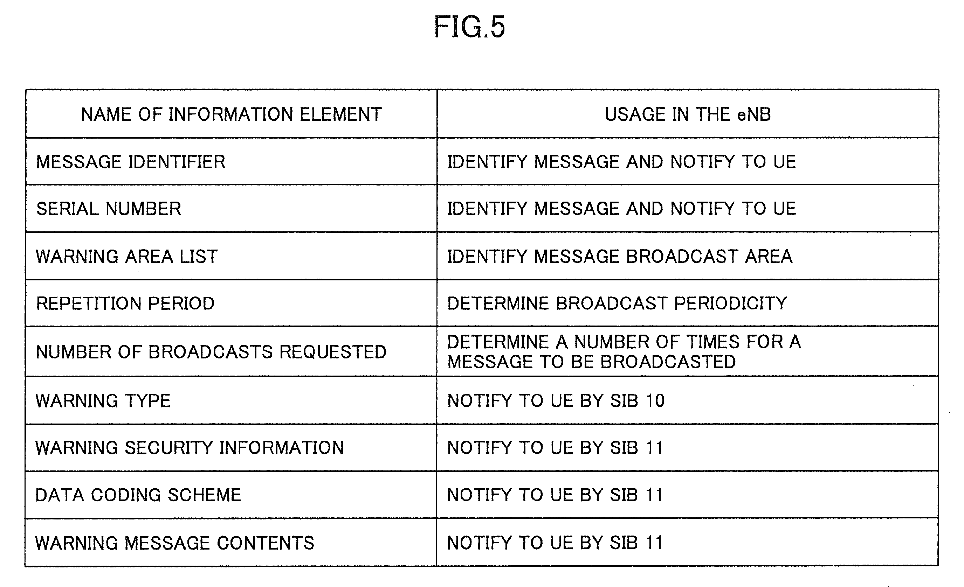

FIG. 5 is a drawing illustrating an example of information elements to be included in a message broadcast request (Write Replace Warning Request) generated by the downlink signal generating unit 4066.

The message broadcast request includes a message identifier (Message Identifier). The message identifier is used by the base station 200 for identifying a message. Note that the message identifier is information transmitted by the base station 200 to user devices 100.

The message broadcast request includes a serial number (Serial Number). The serial number is used by the base station 200 for identifying a message. Note that the serial number is information transmitted by the base station 200 to user devices 100.

The message broadcast request includes a warning area list (Warning Area List). The warning area list is used by the base station 200 for identifying an area in which a message is to be broadcasted.

The message broadcast request includes a repetition period (Repetition Period). The repetition period is used by the base station 200 for determining broadcast periodicity.

The message broadcast request includes a number of broadcasts requested (Number of Broadcasts Requested). The number of broadcasts requested is used by the base station for determining a number of times for a message to be broadcasted.

The message broadcast request includes a warning type (Warning Type). The warning type is information transmitted by the base station 200 to user devices 100.

The message broadcast request includes a warning security information (Warning Security Information). The warning security information is information transmitted by the base station 200 to user devices 100.

The message broadcast request includes a data coding scheme (Data Coding Scheme). The data coding scheme is information transmitted by the base station 200 to user devices 100.

The message broadcast request includes warning message contents (Warning Message Contents). The warning message contents are information transmitted by the base station 200 to user devices 100.

The downlink signal generating unit 4066 inputs a message broadcast request (Write Replace Warning Request), which includes a message identifier, to the instruction unit 408.

The cell broadcast center 400 of the present embodiment includes the instruction unit 408. The instruction unit 408 is connected to the control unit 406. The instruction unit 408, following the instruction from the control unit 406, instructs sending the downlink signals, which should be inputted from the control unit 406, to the base station 200. For example, the instruction unit 408 instructs sending a message broadcast request (Write Replace Warning Request), which should be inputted from the control unit 406, to the base station 200. Also, the instruction unit 408, following the instruction from the control unit 406, instructs sending the uplink signals, which should be inputted from the control unit 406, to the cell broadcast entity 500. For example, The instruction unit 408 instructs sending a message broadcast response (Emergency Broadcast Response) to the cell broadcast entity 500.

The cell broadcast center 400 includes an uplink signal transmitting unit 404. The uplink signal transmitting unit 404 is connected to the instruction unit 408. The uplink signal transmitting unit 404, following the instruction from the instruction unit 408, transmits uplink signals. For example, the uplink signal transmitting unit 404, following the instruction from the instruction unit 408, transmits a message broadcast response (Emergency Broadcast Response) to the cell broadcast entity 500.

The cell broadcast center 400 includes a downlink signal transmitting unit 412. The downlink signal transmitting unit 412 is connected to the instruction unit 408. The downlink signal transmitting unit 412, following the instruction from the instruction unit 408, transmits downlink signals. For example, The downlink signal transmitting unit 412, following the instruction from the instruction unit 408, transmits a message broadcast request (Write Replace Warning Request) to the base station 200.

### <Base station>

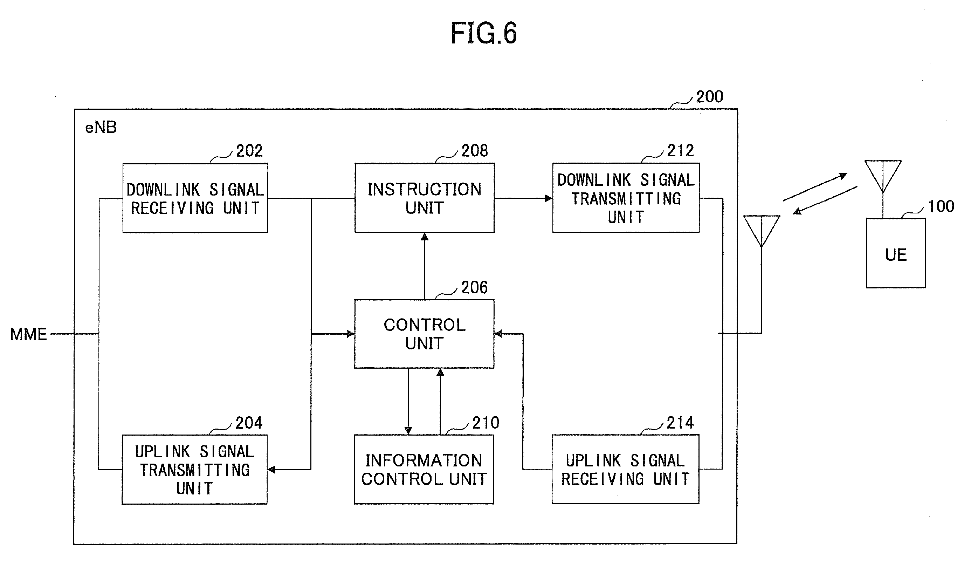

FIG. 6 is a drawing illustrating a base station according to the present embodiment.

The base station 200 includes a downlink signal receiving unit 202. The downlink signal receiving unit 202 receives, for example, downlink signals from the switching center 300. The downlink signals include a message broadcast request (Write Replace Warning Request). The downlink signal receiving unit 202 inputs the received downlink signals to the control unit 206.

The base station 200 includes an uplink signal receiving unit 214. The uplink signal receiving unit 214 receives radio signals from user devices 100.

The base station 200 includes an information control unit 210. The information control unit 210 is connected to the control unit 206. The information control unit 210 stores a table (hereinafter, "message identifier & priority correspondence table") that shows the correspondences between message identifiers, which should be included in the message broadcast request (Write Replace Warning Request), and priorities of messages to be sent according to the message broadcast request. For example, the priorities can be 2 levels, such as "High" and "Low", or more than 2 levels of priorities can be set.

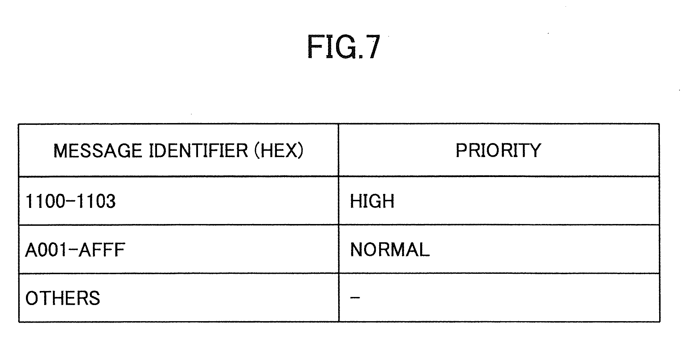

FIG. 7 is a drawing illustrating an example of a message identifier & priority correspondence table of the present embodiment. According to FIG. 7, the priorities of messages, which include "1100(hex)" through "1103(hex)" as message identifiers, are determined to be "high". "Hex" means hexadecimal. Also, the priorities of messages, the messages being message broadcast requests (Write Replace Warning Request) and including "A001(hex)" through "AFFF(hex)" as message identifiers, are determined to be "Normal".

The base station 200 includes the control unit 206. The control unit 206 is connected to the downlink signal receiving unit 202, the uplink signal receiving unit 214, the instruction unit 208 and the information control unit 210. The control unit 206 obtains a message identifier included in downlink signals inputted by the downlink signal receiving unit 202. The control unit 206, referring to the message identifier & priority correspondence table stored in the information control unit 210, obtains a priority corresponding to the message identifier included in the downlink signals. The control unit 206, based on this priority and a priority of the message currently being broadcasted, controls the order of messages to be broadcasted.

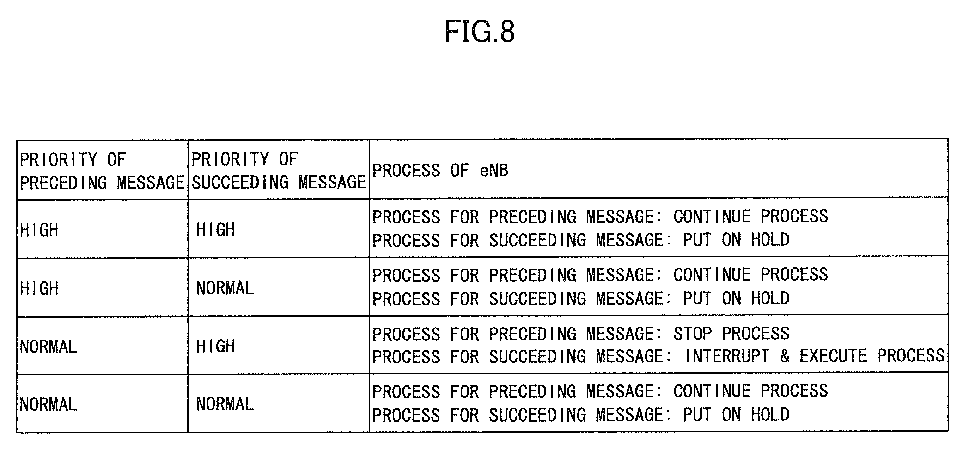

FIG. 8 is a drawing illustrating an example of an order of messages to be broadcasted according to the present embodiment.

In the case where, during broadcasting a preceding message, a message broadcast request (Write Replace Warning Request) is inputted from the downlink signal receiving unit 202, and the control unit 206 compares the priority, which corresponds to the message broadcast request, with the priority of the message currently being broadcasted.

In the case where the priority of the message currently being broadcasted is "High" and the priority, which corresponds to the message broadcast request, is "High", the control unit 206 continues broadcasting the message currently being broadcasted and puts it on hold to broadcast the message that corresponds to the message broadcast request. Because both priorities are high, there is no need for changing the order of broadcasting messages.

In the case where the priority of the message currently being broadcasted is "High" and the priority, which corresponds to the message broadcast request (Write Replace Warning Request), is "Normal", the control unit 206 continues broadcasting the message currently being broadcasted and puts it on hold to broadcast the message that corresponds to the message broadcast request. Because the priority of the message currently being broadcasted is higher, there is a need for preferentially broadcasting the message currently being broadcasted.

In the case where the priority of the message currently being broadcasted is "Normal" and the priority, which corresponds to the message broadcast request (Write Replace Warning Request), is "High", the control unit 206 stops the broadcast of the message currently being broadcasted and performs the broadcast of the message that corresponds to the message broadcast request. Because the priority of the message that corresponds to the message broadcast request is higher, there is a need for preferentially broadcasting the message that corresponds to the message broadcast request. Note that regarding the broadcast-stopped message currently being broadcasted, it may be possible to release the broadcast-stopped state and to resume broadcasting after the preferential broadcast of the message that corresponds to the message broadcast request is completed.

In the case where the priority of the message currently being broadcasted is "Normal" and the priority, which corresponds to the message broadcast request (Write Replace Warning Request), is "Normal", the control unit 206 continues broadcasting the message currently being broadcasted and puts it on hold to broadcast the message that corresponds to the message broadcast request. Because both priorities are the same, there is no need for changing the order of messages to be broadcasted.

### <Detailed description of base station functions>

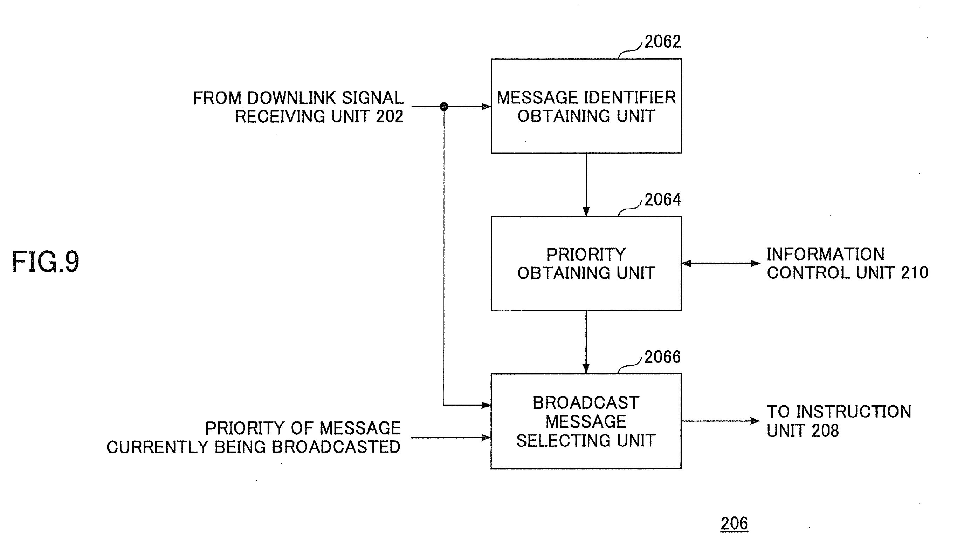

FIG. 9 is a drawing illustrating functions of the control unit 206.

Functions of the control unit 206 include a function performed by a message identifier obtaining unit 2062. The message identifier obtaining unit 2062 is connected to the downlink signal receiving unit 202. The message identifier obtaining unit 2062 obtains a message identifier included in downlink signals from the downlink signal receiving unit 202. For example, a message identifier included in the message broadcast request (Write Replace Warning Request) may be obtained. The message identifier obtaining unit 2062 inputs the message identifier to a priority obtaining unit 2064.

Functions of the control unit 206 include a function performed by the priority obtaining unit 2064. The priority obtaining unit 2064 is connected to the message identifier obtaining unit 2062 and the information control unit 210. The priority obtaining unit 2064, referring to the message identifier & priority correspondence table stored in the information control unit 210, selects a priority that corresponds to the message identifier from the message identifier obtaining unit 2062. The priority obtaining unit 2064 inputs the priority, which corresponds to the message identifier, to a broadcast message selecting unit 2066.

Functions of the control unit 206 include a function performed by the broadcast message selecting unit 2066. The broadcast message selecting unit 2066 is connected to the priority obtaining unit 2064. Information, indicating the priority of the message currently being broadcasted, is inputted to the broadcast message selecting unit 2066. The broadcast message selecting unit 2066 compares the priority, inputted from the priority obtaining unit 2064, with the priority of the message currently being broadcasted. Note that if there is no message currently being broadcasted (i.e., there is no uncompleted broadcast message), then no comparison is needed. In the case where the priority inputted from the priority obtaining unit 2064 is higher than the priority of the message currently being broadcasted, the broadcast message selecting unit 2066 instructs the instruction unit 208 to stop the broadcast of the message currently being broadcasted, and to send downlink signals to be inputted from the downlink signal receiving unit 202. In the case where the priority of the message currently being broadcasted is higher than the priority inputted from the priority obtaining unit 2064, the broadcast message selecting unit 2066 instructs the instruction unit 208 to continue broadcasting the message currently being broadcasted.

The base station 200 includes the instruction unit 208. The instruction unit 208 is connected to the control unit 206.

The instruction unit 208, following the instruction from the control unit 206, instructs sending downlink signals, which should be inputted from the control unit 206, to the user devices 100. For example, the instruction unit 208 instructs broadcasting messages, which should be inputted from the control unit 206, to the user devices 100.

Also, the instruction unit 208, following the instruction from the control unit 206, instructs sending uplink signals, which should be inputted from the control unit 206, to the switching center 300.

The base station 200 includes a uplink signal transmitting unit 204. The uplink signal transmitting unit 204 is connected to the instruction unit 208. The uplink signal transmitting unit 204, following the instruction from the instruction unit 208, transmits uplink signals. For example, the uplink signal transmitting unit 204, following the instruction from the instruction unit 208, transmits a message broadcast response (Write Replace Warning Response) to the switching center 300.

The base station 200 includes a downlink signal transmitting unit 212. The downlink signal transmitting unit 212 is connected to the instruction unit 208. The downlink signal transmitting unit 212, following the instruction from the instruction unit 208, transmits downlink signals. For example, the downlink signal transmitting unit 212, following the instruction from the instruction unit 208, broadcasts a message (System Information Block 10, System Information Block 11) to the user devices 100.

### <Operations of the system>

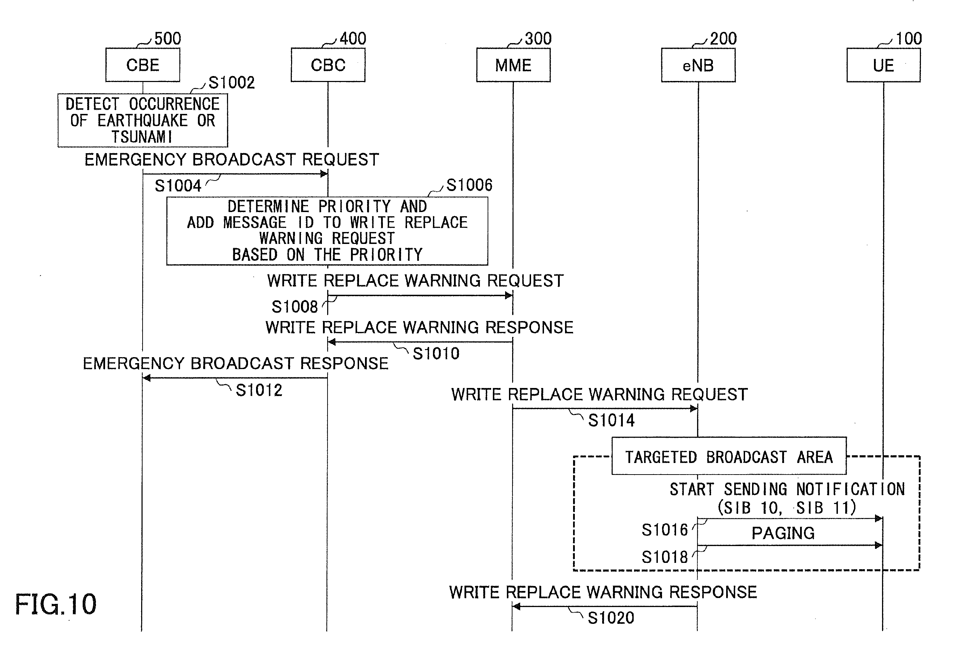

FIG. 10 is a drawing illustrating a sequence chart for operations of the emergency message broadcast system according to the present embodiment.

The cell broadcast entity 500 detects the occurrence of an earthquake or a tsunami (step S1002).

The cell broadcast entity 500 sends a message broadcast request (Emergency Broadcast Request) to the cell broadcast center 400 (step S1004).

The cell broadcast center 400, triggered by receiving the message broadcast request from the cell broadcast entity 500, determines the priority of the message targeted by the message broadcast request. The cell broadcast center 400, based on the priority of the message, adds a message identifier, which corresponds to the priority, to the message broadcast request (step S1006).

The cell broadcast center 400 sends the message broadcast request (Write Replace Warning Request), to which the message identifier is added, to the switching center 300 (step S1008).

The switching center 300, upon receiving the message broadcast request from the cell broadcast center 400, sends a message broadcast response (Write Replace Warning Response) to the cell broadcast center 400 (step S1010). The cell broadcast center 400, which has received the message broadcast response, sends a message broadcast response (Emergency Broadcast Response) to the cell broadcast entity 500 (step S1012).

The switching center 300 forwards the message broadcast request (Write Replace Warning Request) from the cell broadcast center 400 to the base station 200 (step S1014).

The base station 200 in the target broadcast area starts sending broadcast information (step S1016). Whether a base station 200 is in a targeted broadcast area or not can be determined by comparing the information included in the warning area list with the information stored in the base station 200, and it is determined that the base station 200 is in the target broadcast area in the case where the both information is the same. Also, the base station 200 checks to see if the message broadcast request (Write Replace Warning Request), received through the switching center 300, includes a warning type, warning security information, a data coding scheme, and warning message contents. In the case where the warning type is included, the base station 200 starts sending "System Information Block, SIB, 10" included in the broadcast information. Also, in the case where the warning security information, the data coding scheme, and the warning message contents are included, the base station 200 starts sending "System Information 11" included in the broadcast information. Also, when broadcasting System Information Block 10 and 11, it is possible to change the information included in System Information 1 that should be included in the broadcast information, and to send the System Information Blocks 10 and 11 again. For example, it is possible, upon changing the SchedulingInfo included in the System Information, to send the System Information Block 10 and 11 again.

In the case where the base station 200 in the broadcast target area changes the message to be broadcasted, the base station 200 sends a paging (Paging)(step S1018). By the paging, the base station 200 can notify the user device 100 that the message will be changed. For example, by setting an information element, for example, etws-Indication, True, the base station 200 notifies the user device 100. The user device 100, which has received the paging, checks the Scheduling Info of the System Information Block 1, and tries to receive the System Information 10 and 11.

Here, the base station 200, as illustrated in FIG. 8, controls the order of messages to be broadcasted according to the priorities.

When the base station 200 completes broadcasting the message, it sends a broadcast request response (Write Replace Warning Response) to the switching center 300 (step S1020).

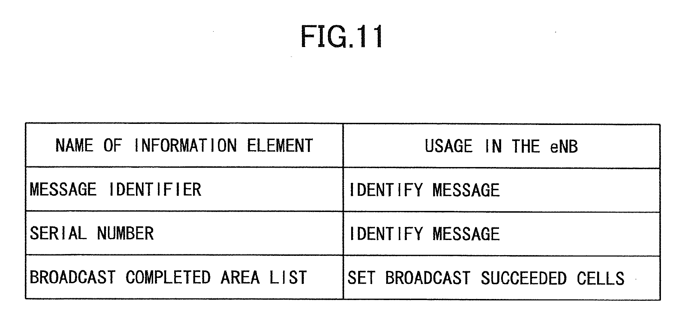

FIG. 11 is a drawing illustrating an example of information elements to be set according to the broadcast result.

By having the message broadcasted, a message identifier, a serial number, and a broadcast completed area list are set.

In the present embodiment above, a system performing radio communication based on LTE scheme is described as an example. But the present embodiment can be appropriately applied to any system in which it is specified that messages to be broadcasted do not include an information element for identifying the priority. For example, the present embodiment can be applied to a system based on schemes other than LTE. In this case, information for identifying a message can be used as information for identifying a priority for the order of the message to be broadcasted.

### <Modified embodiment>

An emergency message broadcast system according to a modified embodiment of the present invention will be described.

In the emergency message broadcast system, when the cell broadcast center 400 adds a message identifier to the message broadcast request (Emergency Broadcast Request), it adds a message identifier that corresponds to an IP address of the cell broadcast entity 500, the cell broadcast entity 500 being the sender of the message broadcast request. In this modified embodiment of the present invention, a correspondence is set beforehand, the correspondence being between the IP address of the cell broadcast entity 500 that is the sender of the message broadcast request and the message identifier that should be added to the message broadcast request. The cell broadcast center 400 sends the message broadcast request (Write Replace Warning Request) to the switching center 300 that belongs to the broadcast area.

The operation of the MME 300 is the same as the embodiment described above.

The base station 200, in response to the message broadcast request from the switching center 300, transmits a message to the user device 100. The message includes an emergency message. When transmitting messages, the base station 200 compares the priority, which is associated with the message identifier included in the message broadcast request (Write Replace Warning Request) from the switching center 300, and the priority, which is associated with the message identifier included in the message currently being broadcasted. Note that if there is no message currently being broadcasted (i.e., there is no uncompleted broadcast message), then no comparison is needed. Based on the result of the comparison, in the case where the priority that is associated with the message identifier included in the message currently being broadcasted is higher than the priority that is associated with the message identifier included in the message broadcast request, the base station 200 continues broadcasting the message currently being broadcasted. In the case where the priority that is associated with the message identifier included in the message broadcast request is higher than the priority that is associated with the message identifier included in the message currently being broadcasted, the base station stops broadcasting the message currently being broadcasted, and broadcasts the message corresponding to the message broadcast request.

In the emergency message broadcast system, the message identifiers are associated with the priorities for the order of the messages to be broadcasted. The base station can identify the message priority that corresponds to the message identifier. Therefore, without requiring an additional information element for identifying priorities, the base station 200 can preferentially broadcast the message that should be preferentially broadcasted.

### <Effect of the present embodiment and the modified embodiment>

In an ETWS for LTE, an information element, which corresponds to a category identification of 3G, to be used for determining the priority of the message to be broadcasted, is not included. Therefore, it is not possible to clarify the priority of the message to be broadcasted. Because the priority of the message to be broadcasted can not be clarified, the base station is expected to execute the processes below when a broadcast request for other messages is received.

The base station either executes a process (preferential to the succeeding message), in which the base station, without waiting for the broadcast completion of the current message, starts the message broadcast for other messages, or executes a process (preferential to the preceding message), in which the base station, after the broadcast of the currently being broadcasted message is completed, starts the message broadcast for other messages.

In the case preferential to the succeeding message, there is a problem that the broadcast of the high priority message should be stopped even if the high priority message is being broadcasted. In the case preferential to the preceding message, there is a problem that the broadcast of the high priority message should get delayed because even if a message broadcast request for another high priority message is received during the broadcast of the low priority message, the broadcast of the other high priority message is only performed after the broadcast of the low priority message is completed. In this case, it becomes difficult to meet the requirement that high priority messages should reach user devices within four seconds.

According to the present embodiment, it is possible to perform priority control for messages to be broadcasted even when information elements, which should be included in a message broadcast request, do not include an information element for identifying a priority of the message to be broadcasted.

The method for controlling the order of messages to be broadcasted according to the present embodiment can be applied to a system in which messages are broadcasted using broadcast information.

The message broadcast system of the present embodiment is a message broadcast system for broadcasting messages to user devices that perform radio communications based on LTE, the message broadcast system including a cell broadcast center and a base station, wherein the cell broadcast center is configured to include a sender identifier obtaining unit for obtaining a sender identifier of a message broadcast request from the message broadcast request, the message broadcast request being a request for message broadcast, a first table, in which the sender identifier of the message broadcast request is associated with message identifier information that is used for identifying a message to be added to the message and that is corresponding to a priority for controlling the order of messages to be broadcasted from the base station, a message identifier information selecting unit configured to select, from the first table, the message identifier information corresponding to the sender identifier obtained by the sender identifier obtaining unit, a message generating unit configured to generate a message including the message identifier information selected by the message identifier selecting unit, and a transmission unit configured to transmit the message, generated by the message generating unit, to the base station; and wherein, the base station includes a message identifier information obtaining unit configured to obtain the message identifier information included in the message from the cell broadcast center, a second table associating the message identifier information with the priority for controlling the order of messages to be broadcasted, a priority obtaining unit configured to obtain the priority, from the second table, corresponding to the message identifier information obtained by the message identifier information obtaining unit, and a broadcast controlling unit configured to control the order of messages to be broadcasted based on the priority obtained by the priority obtaining unit.

Furthermore, the message identifier information is included in information elements included in the message as a message broadcast request (Write Replace Warning Request) which should be sent to the base station from a switching center when an emergency message is broadcasted.

Furthermore, the message identifier information includes a message identifier or a serial number for identifying a message.

The base station is a base station, which broadcasts messages to user devices that perform radio communications based on LTE, wherein, the base station includes a message identifier information obtaining unit configured to obtain message identifier information included in a message from a cell broadcast center, a second table associating the message identifier information with a priority for controlling the order of messages to be broadcasted, a priority obtaining unit configured to obtain, from the second table, the priority corresponding to the message identifier information obtained by the message identifier information obtaining unit, and a broadcast controlling unit configured to control the order of broadcast messages based on the priority obtained by the priority obtaining unit.

The message broadcast method of the present embodiment is a message broadcast method, in a message broadcast system, for broadcasting messages to user devices that perform radio communications based on LTE, wherein, the message broadcast system includes a cell broadcast center and a base station; steps performed by the cell broadcast center include a sender identifier obtaining step for obtaining a sender identifier of a message broadcast request from the message broadcast request, a message identifier information selecting step for selecting message identifier information, corresponding to the sender identifier obtained by the sender identifier obtaining step, from a first table associating the sender identifier of the message broadcast request with message identifier information that is used for identifying a message to be added to the message and that is corresponding to a priority for controlling the order of messages to be broadcasted from the base station, a message generating step for generating a message including the message identifier information selected by the message identifier selecting step, and a transmission step for transmitting the message, generated by the message generating step, to the base station; and steps performed by the base station include a message identifier obtaining step for obtaining message identifier information included in the message from the cell broadcast center, a priority obtaining step for obtaining, from a second table associating the message identifier information with the priority for controlling the order of messages to be broadcasted, a priority that corresponds to the message identifier information obtained by the message identifier information obtaining step and a broadcast controlling step for controlling the order of messages to be broadcasted based on the priority obtained by the priority obtaining step.

Furthermore, the message identifier information is included in information elements included in a message which should be sent to the base station from a switching center when an emergency message is broadcasted.

Furthermore, the message identifier information includes a message identifier or a serial number for identifying a message.

The message broadcast method of the present embodiment is a message broadcast method of a base station for broadcasting messages to user devices that perform radio communications based on LTE, wherein, the message broadcast method includes a message identifier information obtaining step for obtaining message identifier information included in a message from a cell broadcast center, a priority obtaining step for obtaining, from a second table associating the message identifier information with the priority for controlling the order of messages to be broadcasted, a priority that corresponds to the message identifier information obtained by the message identifier information obtaining step, and a broadcast controlling step for controlling the order of broadcast messages based on the priority obtained by the priority obtaining step.

For the sake of convenience, the present embodiments are described using specific numbers in order to facilitate understanding of the invention, but these numbers are used just as an example and, unless otherwise noted, any appropriate number can be used.

The present invention has been described above referring to specific embodiments, but these embodiments are used just as examples, and a person skilled in the art would easily understand various modified embodiments, amended embodiments and replacement embodiments. For the sake of convenience, devices of the present embodiments are described using functional block diagrams, but those devices can be implemented as hardware, software, or combination of both. The present invention is not limited to these embodiments, but includes various variations and modifications which may be made without departing from the spirit of the present invention.

The present application is based on and claims the benefit of priority of Japanese Priority Application No. 2011-024304 filed on February 7, 2011, the entire contents of which are hereby incorporated by reference.

### DESCRIPTION OF THE REFERENCE NUMERALS

- 100: User device (UE: User Equipment)
- 200: Base station (eNB: eNodeB)
- 202: Downlink signal receiving unit
- 204: Uplink signal receiving unit
- 206: Control unit
- 2062: Message identifier obtaining unit
- 2064: Priority obtaining unit
- 2066: Broadcast message selecting unit
- 300: Switching center (MME: Mobility Management Entity)
- 400: Cell broadcast center (CBC)
- 402: Downlink signal receiving unit
- 404: Uplink signal transmitting unit
- 406: Control unit
- 4062: Sender identifier obtaining unit
- 4064: Message identifier selecting unit
- 4066: Downlink signal generating unit
- 408: Instruction unit
- 410: Information control unit
- 412: Downlink signal transmitting unit
- 414: Uplink signal receiving unit
- 500: Cell broadcast entity (CBC)

## Claims

1. A message broadcast system for broadcasting messages to user devices that perform radio communications based on LTE, the message broadcast system comprising:
a cell broadcast center and a base station, wherein
the cell broadcast center is configured to include
a sender identifier obtaining unit for obtaining, from a message broadcast request for requesting a message broadcast, a sender identifier of the message broadcast request,
a first table associating the sender identifier of the message broadcast request with message identifier information that is used for identifying a message to be added to the message and that is corresponding to a priority for controlling the order of messages to be broadcasted from the base station,
a message identifier information selecting unit configured to select, from the first table, the message identifier information corresponding to the sender identifier obtained by the sender identifier obtaining unit,
a message generating unit configured to generate a message including the message identifier information selected by the message identifier selecting unit, and
a transmission unit configured to transmit the message, generated by the message generating unit, to the base station; wherein
the base station is configured to include
a message identifier information obtaining unit configured to obtain the message identifier information included in the message from the cell broadcast center,
a second table associating the message identifier information with the priority for controlling the order of messages to be broadcasted,
a priority obtaining unit configured to obtain the priority, from the second table, corresponding to the message identifier information obtained by the message identifier information obtaining unit, and
a broadcast controlling unit configured to control the order of broadcast messages based on the priority obtained by the priority obtaining unit.

2. The message broadcast system as claimed in claim 1, wherein
the message identifier information is included in an information element included in a message that should be sent to the base station from a switching center when an emergency message is broadcasted.

3. The message broadcast system as claimed in claim 2, wherein
the message identifier information includes a message identifier or a serial number for identifying a message.

4. A base station for broadcasting messages to user devices that perform radio communications based on LTE, the base station comprising:
a message identifier information obtaining unit configured to obtain message identifier information included in a message from a cell broadcast center;
a second table associating the message identifier information with a priority for controlling the order of messages to be broadcasted,
a priority obtaining unit configured to obtain the priority from the second table, the priority corresponding to the message identifier information obtained by the message identifier information obtaining unit, and
a broadcast controlling unit configured to control the order of messages to be broadcasted based on the priority obtained by the priority obtaining unit.

5. A message broadcast method in a message broadcast system for broadcasting messages to user devices that perform radio communications based on LTE, the message broadcast system comprising a cell broadcast center and a base station, the message broadcast method comprising:
as steps performed by the cell broadcast center,
a sender identifier obtaining step of obtaining a sender identifier of a message broadcast request from the message broadcast request,
a message identifier information selecting step of selecting message identifier information, corresponding to the sender identifier obtained by the sender identifier obtaining step, from a first table associating the sender identifier of the message broadcast request with message identifier information that is used for identifying a message to be added to the message and that is corresponding to a priority for controlling the order of messages to be broadcasted from the base station,
a message generating step of generating a message including the message identifier information selected by the message identifier selecting step, and
a transmission step of transmitting the message, generated by the message generating step, to the base station; and
as steps performed by the base station,
a message identifier obtaining step of obtaining message identifier information included in the message from the cell broadcast center,
a priority obtaining step of obtaining, from a second table associating the message identifier information with the priority for controlling the order of messages to be broadcasted, a priority that corresponds to the message identifier information obtained by the message identifier information obtaining step, and
a broadcast controlling step of controlling the order of broadcast messages based on the priority obtained by the priority obtaining step.

6. The message broadcast method as claimed in claim 5, wherein
the message identifier information is included in information elements included in a message that should be sent to the base station from a switching center when an emergency message is broadcasted.

7. The message broadcast method as claimed in claim 6, wherein
the message identifier information includes a message identifier or a serial number for identifying a message.

8. A message broadcast method in a base station for broadcasting messages to user devices that perform radio communications based on LTE, the message broadcast method comprising:
a message identifier obtaining step of obtaining message identifier information included in a message from a cell broadcast center,
a priority obtaining step of obtaining, from a second table associating the message identifier information with the priority for controlling the order of messages to be broadcasted, a priority that corresponds to the message identifier information obtained by the message identifier information obtaining step, and
a broadcast controlling step of controlling the order of broadcast messages based on the priority obtained by the priority obtaining step.
